# EUROPÄISCHE PATENTSCHRIFT

(11) **EP 3 879 015 B1**
(45) Veröffentlichungstag und Bekanntmachung des Hinweises auf die Patenterteilung: **14.12.2022**
(21) Anmeldenummer: 21160595.1
(22) Anmeldetag: 04.03.2021
(51) Int. Cl.: D01H 1/22, B65H 54/74, F16D 1/02, D01H 5/82, F16D 1/09, F16D 1/092, F16H 57/00

(54) **VORRICHTUNG ZUR DREHMOMENTÜBERTRAGUNG**
DEVICE FOR TORQUE TRANSFER
DISPOSITIF DE TRANSMISSION DE COUPLE

(30) Priorität: 09.03.2020 DE 102020106278
(43) Veröffentlichungstag der Anmeldung: 15.09.2021
(73) Patentinhaber: Saurer Spinning Solutions GmbH & Co. KG, 52531 Übach-Palenberg (DE)
(72) Erfinder: Stitz, Albert, 51515 Kürten (DE)
(74) Vertreter: Schniedermeyer, Markus

(56) Entgegenhaltungen:
- DE-A1- 2 530 052
- DE-A1- 19 519 959
- DE-A1-102007 039 523

## Beschreibung

Die Erfindung betrifft eine Vorrichtung zur Drehmomentübertragung zwischen einer Antriebseinheit und einem rotierenden Bauteil einer Spinnmaschine, eine Antriebseinrichtung für eine Spinnmaschine sowie eine Spinnmaschine mit einer Vorrichtung zur Drehmomentübertragung.

Spinnmaschinen und insbesondere Ringspinnmaschinen weisen häufig zahlreiche, zueinander identische und aneinander angeordnete Arbeitsstellen mit je einer Spinneinheit auf, wobei die Spinneinheiten und/oder mit den Spinneinheiten verbundene Bauteile häufig über eine gemeinsame Antriebseinrichtung der Spinnmaschine angetrieben werden. Eine solche Antriebseinrichtung weist typischerweise eine oder mehrere Antriebseinheiten auf, wobei jede Antriebseinheit mit dem anzutreibenden Bauteil, beispielsweise einer Walze eines vor der Spinneinheit angeordneten Streckwerks, unmittelbar oder zumindest mittelbar über eine Welle verbunden ist. Dabei kann beispielsweise eine Getriebeeinheit zwischen der Antriebseinheit und der Welle angeordnet sein. Bei besonders langen Wellen sind zumeist entlang des Verlaufes der Welle mehrere Antriebs- und/oder Hilfsantriebseinheiten angeordnet, um eine gleichmäßige Rotation der Welle zu gewährleisten. Dazu wird das Drehmoment jeder Antriebseinheit auf die Welle übertragen, wozu typischerweise in einem Bereich zwischen zwei Arbeitsstellen der Spinnmaschine an der Welle ein Zahnrad festgelegt ist, auf das die Antriebseinheit wirkt.

Insbesondere bei sehr langen Wellen mit mehreren, entlang des Verlaufes der Welle angeordneten Zahnrädern, die jeweils durch eine Hilfsantriebseinheit angetrieben werden, kommt es jedoch häufig zu übermäßigen Zug- und/oder Druckspannungen in der Welle sowie an daran angeordneten Bauteilen, wie einer Walze eines Streckwerks, wodurch der Verschleiß der Bauteile erhöht wird und es zu Beschädigungen der Bauteile, insbesondere des an der Welle festgelegten Zahnrades, kommt. Zudem ist der Austausch eines innerhalb einer langen Welle festgelegten Zahnrades zur Wartung oder zur Reparatur kompliziert und zeitaufwändig, da typischerweise wenigstens ein längerer Abschnitt der Welle und bisweilen die gesamte Welle ausgebaut werden muss, was zu einer langandauernden Betriebsunterbrechung der Spinnmaschine führt.

Der Erfindung liegt daher die Aufgabe zugrunde, eine Vorrichtung zur Drehmomentübertragung zwischen einer Antriebseinheit und einem rotierenden Bauteil einer Spinnmaschine, eine Antriebseinrichtung für eine Spinnmaschine sowie eine Spinnmaschine bereitzustellen, die einen Antrieb einer Welle mit besonders geringen unerwünschten Zug- und/oder Druckspannungen und somit mit einem besonders geringen Verschleiß der Bauteile ermöglichen, wobei die Vorrichtung sowie die Spinnmaschine besonders zuverlässig zu betreiben sowie besonders leicht und schnell zu warten sowie zu reparieren sind.

Die Aufgabe wird erfindungsgemäß durch eine Vorrichtung zur Drehmomentübertragung gemäß Anspruch 1, durch eine Antriebseinrichtung für eine Spinnmaschine gemäß Anspruch 11 sowie durch eine Spinnmaschine gemäß Anspruch 12 gelöst. Vorteilhafte Weiterbildungen der Erfindung sind in den abhängigen Ansprüchen angegeben.

Die erfindungsgemäße Vorrichtung zur Drehmomentübertragung zwischen einer Antriebseinheit und einem rotierenden Bauteil einer Spinnmaschine oder eines daran angeordneten Bauteils, insbesondere eines Streckwerks, weist ein Zahnradbauteil mit einer Verzahnung zur Aufnahme eines Drehmoments von der Antriebseinheit und zwei Wellen zur Übertragung des Drehmoments auf jeweils ein rotierendes Bauteil auf, wobei das Zahnradbauteil an beiden Seiten der Verzahnung jeweils einen axialen Fortsatz mit einer konischen Pressfläche zur Übertragung des Drehmoments auf eine der Wellen aufweist und jede der konischen Pressflächen in einer Aufnahme einer der Wellen angeordnet ist und dabei eine Pressverbindung zur Drehmomentübertragung zwischen dem Zahnradbauteil und der Welle bildet.

Weiterhin betrifft die Erfindung eine Antriebseinrichtung für eine Spinnmaschine, insbesondere für ein Streckwerk einer Spinnmaschine und dabei besonders bevorzugt einer Ringspinnmaschine, mit einer motorischen Antriebseinheit und einer erfindungsgemäßen Vorrichtung zur Drehmomentübertragung zwischen der Antriebseinheit und einem rotierenden Bauteil einer Spinnmaschine oder eines daran angeordneten Bauteils, insbesondere eines Streckwerks.

Schließlich betrifft die Erfindung noch eine Spinnmaschine, insbesondere ein Streckwerk einer Spinnmaschine und dabei besonders bevorzugt einer Ringspinnmaschine, mit mehreren zueinander identischen Arbeitsstellen sowie wenigstens eine erfindungsgemäße Vorrichtung zur Drehmomentübertragung zwischen einer Antriebseinheit und einem rotierenden Bauteil der Spinnmaschine oder eines daran angeordneten Bauteils, insbesondere eines Streckwerks, wobei die Drehmomentübertragung an einer Antriebsstelle, insbesondere auf das Zahnradbauteil der Vorrichtung zur Drehmomentübertragung, mittig zwischen zwei Arbeitsstellen erfolgt.

Das beidseitige Verbinden des Zahnradbauteils mit jeweils einer Welle, sodass die Gesamtwelle der Spinnmaschine aus einzelnen Wellenabschnitten und wenigstens einem dazwischen angeordneten Zahnradbauteil gebildet ist, sowie die Festlegung der Bauteile aneinander mittels einer Pressverbindung ermöglicht zum einen eine zuverlässige Drehmomentübertragung und zum anderen auch ein leichtes und schnelles Trennen des Zahnradbauteils von der Welle, sodass eine Wartung oder Reparatur schnell und ohne eine langandauernde Betriebsunterbrechung durchgeführt werden kann. Zudem erlaubt es die Pressverbindung, die einzelnen Bauteile frei von unerwünschten Zug- und Druckspannungen aneinander anzuordnen, sodass die Vorrichtung sowie die gesamte Spinnmaschine besonders verschleißarm betrieben werden können.

Eine Vorrichtung zur Drehmomentübertragung kann grundsätzlich eine beliebige Einheit sein, die ein Bauteil zur Aufnahme einer Drehung bzw. eines Drehmoments an einem Ort sowie ein Bauteil zur Weitergabe einer Drehung bzw. eines Drehmoments an einem anderen Ort aufweist. Dabei kann die Vorrichtung das Drehmoment sowohl unverändert übertragen, als auch das Drehmoment verändern und dazu beispielsweise wenigstens eine Getriebestufe oder ein anderes, eine Übersetzung verursachendes Bauteil aufweisen. Bevorzugt überträgt die Vorrichtung zur Drehmomentübertragung das Drehmoment jedoch unverändert, wobei jedoch vor und/oder hinter der Vorrichtung wenigstens ein Getriebe angeordnet sein kann. Darüber hinaus kann die Vorrichtung zur Drehmomentübertragung beliebige weitere Funktionen aufweisen, wobei die Vorrichtung zur Drehmomentübertragung beispielsweise zugleich die Lagerung der Welle, zumindest aber einer Seite der Welle bilden kann.

Erfindungsgemäß ist die Vorrichtung zur Drehmomentübertragung dazu gebildet, ein Drehmoment einer Antriebseinheit, insbesondere einer Antriebseinheit einer Antriebseinrichtung, an ein rotierendes Bauteil zu übertragen. Die Antriebseinheit der Antriebseinrichtung ist dabei zunächst eine Vorrichtung, die einen rotierenden Antrieb bzw. ein Drehmoment bereitstellt, wobei als Antriebseinheit ein Elektromotor bevorzugt wird. Die Drehmomentübertragung von der Antriebseinheit kann grundsätzlich unmittelbar oder auch mittelbar, beispielsweise über wenigstens eine Getriebeeinheit und/oder wenigstens eine Welle erfolgen. Besonders bevorzugt erfolgt die Drehmomentübertragung zwischen der Antriebseinheit und der Vorrichtung zur Drehmomentübertragung formschlüssig, insbesondere mittels eines Zahnrades oder eines Wellenritzels.

Die Antriebseinrichtung, die wenigstens eine Antriebseinheit aufweist, ist grundsätzlich zum Antrieb wenigstens eines Bauteils einer Spinnmaschine und bevorzugt mehrerer Bauteile einer Spinnmaschine über eine gemeinsame Welle vorgesehen. Ganz besonders bevorzugt treibt die Antriebseinrichtung über eine Welle ein an jeder Arbeitsstelle der Spinnmaschine angeordnetes Bauteil an. Dabei kann es sich bei der Antriebseinrichtung um eine Hauptantriebseinrichtung handeln, die bevorzugt eine an einem Ende der anzutreibenden Welle angeordnete Antriebseinheit und/oder mehrere entlang des Verlaufs der Welle angeordnete Antriebseinheiten aufweist. Alternativ kann die Antriebseinrichtung auch eine Hilfsantriebseinrichtung, bevorzugt für wenigstens eine Streckwerkswalze, insbesondere eine Streckwerksunterwalze, einer Spinnmaschine sein, die insbesondere in einem mittleren Bereich einer Welle angeordnet ist. Dabei ist eine Hilfsantriebseinrichtung besonders bevorzugt dazu vorgesehen, eine Hauptantriebseinrichtung zu unterstützen und/oder ein Verwinden einer sehr langen Welle zu verhindern. Dabei ist jedoch auch eine Gestaltung ohne Hauptantriebseinrichtung und ausschließlich mit Hilfsantriebseinrichtungen denkbar. Bevorzugt weist die Antriebseinrichtung auch wenigstens eine Getriebeeinheit, insbesondere ein Hauptgetriebe und/oder wenigstens ein Verteilergetriebe auf. Besonders bevorzugt sind an jeder Antriebseinheit der Antriebseinrichtung ein Hauptgetriebe und zwei Verteilergetriebe angeordnet.

Bei der Spinnmaschine kann es sich grundsätzlich um eine beliebige Maschine zum Herstellen und/oder zum Verarbeiten von Textilfasern oder eines Fadens aus Textilfasern handeln. Bevorzugt ist die Spinnmaschine eine Ringspinnmaschine und besonders bevorzugt ist an der Spinnmaschine oder einem Bauteil einer Spinnmaschine, wie einem Streckwerk oder einer Spulvorrichtung, wenigstens eine erfindungsgemäße Vorrichtung zur Drehmomentübertragung und besonders bevorzugt mehrere, insbesondere zueinander identische Vorrichtungen zur Drehmomentübertragung angeordnet. Die Spinnmaschine weist dabei bevorzugt mehrere Arbeitsstellen mit jeweils einer Spinneinheit auf, wobei jede Arbeitsstelle besonders bevorzugt ein eigenes Streckwerk aufweist bzw. jeder Spinneinheit jeweils ein Streckwerk vorgelagert ist.

Obwohl die erfindungsgemäße Vorrichtung zur Drehmomentübertragung an einer beliebigen Stelle der Spinnmaschine angeordnet sein kann, erfolgt bevorzugt eine Drehmomentübertragung auf das rotierende Bauteil ausschließlich mittig zwischen zwei Arbeitsstellen, wobei insbesondere bevorzugt kein endseitiger Antrieb an dem rotierenden Bauteil angeordnet ist. Ebenfalls besonders bevorzugt sind mehrere Antriebsstellen, an denen jeweils eine erfindungsgemäße Vorrichtung zur Drehmomentübertragung angeordnet ist, jeweils zwischen zwei von vielen Arbeitsstellen der Spinnmaschine vorgesehen. Dabei muss jedoch nicht grundsätzlich zwischen jeweils benachbarten Arbeitsstellen eine Antriebsstelle liegen. Dies kann aber auch der Fall sein, wobei es speziell bevorzugt ist, dass wenigstens jeweils mittig zwischen jeder zweiten Arbeitsstelle bzw. in jeder zweiten Verbindung benachbarter Arbeitsstellen keine solche Antriebsstelle vorgesehen ist.

Erfindungsgemäß weist die Vorrichtung zur Drehmomentübertragung ein Zahnradbauteil mit einer Verzahnung zur Aufnahme eines Drehmoments von der Antriebseinheit auf. Dabei kann die Aufnahme eines Drehmoments von der Antriebseinheit sowohl unmittelbar von der Antriebseinheit, insbesondere von einer Ausgangswelle der Antriebseinheit, oder aber mittelbar über ein oder mehrere Bauteile, beispielsweise wenigstens eine Getriebeeinheit und/oder eine weitere Welle, erfolgen. Generell ist das Zahnradbauteil grundsätzlich ein Bauteil zur formschlüssigen Drehmomentübertragung und weist dazu bevorzugt eine Verzahnung, insbesondere eine Außenverzahnung auf. Besonders bevorzugt erstreckt sich die Verzahnung des Zahnradbauteils über den vollen Umfang des Zahnradbauteils. Insbesondere bevorzugt kann das Zahnradbauteil ein Zahnrad und/oder ein Wellenritzel aufweisen. Ebenfalls bevorzugt ist die Verzahnung in der Mitte des Zahnradbauteils, besonders bevorzugt mit Bezug auf eine Mittellängsachse bzw. axiale Richtung des Zahnradbauteils angeordnet. Erfindungsgemäß ist das Zahnradbauteil zwischen den beiden Wellen angeordnet, wobei die Mittellängsachsen des Zahnradbauteils und der Wellen besonders bevorzugt parallel zueinander und ganz besonders bevorzugt deckungsgleich angeordnet sind.

Zur Übertragung eines Drehmoments von dem Zahnradbauteil auf jede der beiden Wellen weist das Zahnradbauteil erfindungsgemäß zwei axiale Fortsätze auf. Diese erstrecken sich dabei entlang der Mittellängsachse des Zahnradbauteils und/oder entlang der Rotationsachse der Verzahnung. Bevorzugt schließt sich jeder axiale Fortsatz unmittelbar an den die Verzahnung aufweisenden Teil des Zahnradbauteils an. Ebenfalls bevorzugt weist jeder axiale Fortsatz einen zylindrischen Abschnitt und einen konischen Abschnitt auf, wobei der zylindrische Abschnitt besonders bevorzugt an den die Verzahnung aufweisenden Teil unmittelbar angrenzt.

Jeder der beiden axialen Abschnitte weist erfindungsgemäß eine konische Pressfläche auf, die bevorzugt durch die Außenfläche des Zahnradbauteils in einem konischen Abschnitt gebildet wird. Weiterhin bevorzugt erstreckt sich die konische Pressfläche über den gesamten Umfang des Zahnradbauteils und/oder weist eine rotationssymmetrische Form auf. Die konische Pressfläche ist bevorzugt jeweils am Ende bzw. im Endbereich der axialen Fortsätze angeordnet, wobei der Durchmesser der konischen Pressfläche zum Ende des axialen Fortsatzes hin abnimmt.

Erfindungsgemäß weist die Vorrichtung zur Drehmomentübertragung zwei Wellen auf, wobei die erste Welle an einer ersten Seite und die zweite Welle an einer zweiten Seite des Zahnradbauteils angeordnet ist und wobei sich beide Seiten bevorzugt gegenüberliegen und/oder im Bereich eines Endes des Zahnradbauteils angeordnet sind. Bei der Welle kann es sich grundsätzlich zunächst um ein beliebiges Bauteil oder eine beliebige Baugruppe zum Übertragen einer von einer Antriebseinheit stammenden Rotation bzw. eines Drehmoments über die Vorrichtung zur Drehmomentübertragung auf ein weiteres Bauteil der Spinnmaschine handeln, wobei beliebige weitere Vorrichtungen, insbesondere Getriebe, dazwischen angeordnet sein können. Jede der beiden Wellen ist bevorzugt zum Antrieb einer Streckwerkswalze, insbesondere einer Streckwerksunterwalze bzw. eines Steckwerkszylinders vorgesehen. Dazu ist die Streckwerkswalze besonders bevorzugt unmittelbar und/oder verdrehfest an der Welle angeordnet. Ganz besonders bevorzugt ist die Welle einstückig mit dem rotierenden Bauteil, insbesondere der Streckwerkswalze gebildet. Daneben kann es sich bei der Welle jedoch auch um ein beliebiges anderes Bauteil einer Spinnmaschine zur Drehmomentübertragung bzw. zum Antrieb eines rotierenden Bauteils handeln.

Erfindungsgemäß ist je ein axialer Fortsatz mit der konischen Pressfläche in einer Aufnahme der Wellen mit einer korrespondierenden konischen Form zur Drehmomentübertragung festgelegt, wobei die erste konische Pressfläche in der Aufnahme der ersten Welle und die zweite konische Pressfläche in der Aufnahme der zweiten Welle angeordnet ist. Dabei ist die Aufnahme bevorzugt in einer Endfläche der Welle angeordnet und/oder erstreckt sich in axialer Richtung bzw. entlang der Rotationsachse der Welle. Dabei weist die Aufnahme eine konische Form auf, wobei die Aufnahme bevorzugt länger ist als die konische Pressfläche des Zahnradbauteils. Insbesondere weist jede Aufnahme eine zur konischen Pressfläche korrespondierende Form zum Bilden der Pressverbindung auf, sodass eine Drehmomentübertragung von dem Zahnradbauteil auf die Welle erfolgen kann.

Erfindungsgemäß ist jeweils ein axialer Fortsatz in einer Aufnahme einer Welle angeordnet, wobei bevorzugt der gesamte, die konische Pressfläche aufweisende Teil des axialen Fortsatzes in der Aufnahme angeordnet ist. Dabei wird zur Übertragung des Drehmoments von dem Zahnradbauteil auf die Welle eine Pressverbindung zwischen der konischen Pressfläche und der korrespondierenden Oberfläche der Aufnahme gebildet. Eine Pressverbindung ist dabei grundsätzlich eine wenigstens teils, bevorzugt vollständig kraftschlüssige Verbindung, bei der die konische Pressfläche mit der Aufnahme der Welle über Reibkräfte verbunden ist. Dabei kann es sich beispielsweise um eine Kegelverbindung handeln. Besonders bevorzugt liegt keine form- und/oder stoffschlüssige Verbindung ergänzend zur kraftschlüssigen Verbindung vor. Zudem wird die Verbindung zwischen dem Zahnradbauteil und jeweils einer Welle bevorzugt ausschließlich im Bereich der konischen Pressfläche erreicht.

Bei einer bevorzugten Ausgestaltung der erfindungsgemäßen Vorrichtung zur Drehmomentübertragung ist zur axialen Fixierung des Zahnradbauteils an den beiden Wellen ein Zuganker vorgesehen, der an beiden Enden ein Gewinde aufweist, das jeweils in einem korrespondierenden Gewinde in einer Zugankeraufnahme der Welle festlegbar bzw. festgelegt ist, wodurch eine sichere und spannungsfreie Festlegung des Zahnradbauteils an der jeweiligen Welle möglich ist und zugleich eine zuverlässige Übertragung des Drehmoments sichergestellt wird. Der Zuganker ist dabei bevorzugt ein stabförmiges Bauteil mit Gewinden an beiden Enden. Die Gewinde des Zugankers sind besonders bevorzugt Außengewinde und ganz besonders bevorzugt sind die beiden Gewinde des Zugankers gegenläufig gebildet. Wenigstens die das Gewinde aufweisenden Enden des Zugankers weisen ebenfalls bevorzugt einen gleichbleibenden Durchmesser bzw. eine zylindrische Form auf. Obwohl der Zuganker grundsätzlich aus beliebig vielen Bauteilen als Baugruppe gebildet sein kann, ist ein einstückig gebildeter Zuganker bevorzugt. Die Zugankeraufnahme ist bevorzugt tiefer in axialer Richtung der Welle als das Ende des Zugankers bzw. der ein Gewinde aufweisende Bereich des Zugankers lang ist. Die Zugankeraufnahme der Welle ist besonders bevorzugt eine Bohrung, besonders bevorzugt mit einem gleichbleibenden Durchmesser. Ebenfalls bevorzugt weist die Zugankeraufnahme ein mit dem Gewinde des Zugankers korrespondierendes Innengewinde auf.

Bei einer bevorzugten Ausgestaltung der erfindungsgemäßen Vorrichtung zur Drehmomentübertragung ist die Zugankeraufnahme in der Welle koaxial zur Aufnahme für einen axialen Fortsatz und insbesondere im Bereich der konischen Pressfläche des Zahnradbauteils angeordnet, wodurch eine besonders zuverlässige ausgerichtete und spannungsfreie Anordnung erreicht werden kann. Ebenfalls bevorzugt ist die Zugankeraufnahme mittig und/oder entlang einer Rotationsachse verlaufend und/oder entlang der Mittellängsachse der Welle angeordnet.

Nach einer vorteilhaften Weiterbildung der erfindungsgemäßen Vorrichtung zur Drehmomentübertragung ist der Zuganker in einer Zugankerbohrung des Zahnradbauteils angeordnet, wobei die Zugankerbohrung bevorzugt als eine entlang der Mittellängsachse und/oder der Rotationsachse des Zahnradbauteils verlaufende Bohrung gebildet ist, wodurch eine besonders einfache und zugleich spannungsfreie Anordnung des Zahnradbauteils gegenüber dem Zuganker erreicht werden kann. Generell ist der Zuganker bevorzugt das Zahnradbauteil durchdringend angeordnet. Die Zugankerbohrung kann zunächst eine beliebige Form aufweisen, wobei eine zylindrische Form mit einem über die Länge gleichbleibendem Durchmesser bevorzugt ist. Zum leichteren Eindrehen und/oder Spannen des Zugankers weist bevorzugt wenigstens eine Oberfläche einer Welle und besonders bevorzugt die Oberfläche jeder Welle, insbesondere in einem Oberflächenabschnitt oberhalb der Aufnahme bzw. außenliegend über der Aufnahme, eine raue Oberflächenstruktur auf.

Das Zahnradbauteil und der Zuganker sind dabei besonders bevorzugt zwei separate Bauteile. Um eine möglichst spannungsfreie Anordnung des Zahnradbauteils an den beiden Wellen zu erreichen, ist der Zuganker bevorzugt in der Zugankerbohrung des Zahnradbauteils axial verschieblich angeordnet und/oder frei rotierbar, wodurch effizient ein Auftreten und/oder eine Übertragung von Spannungen zwischen den Bauteilen verhindert wird. Besonders bevorzugt sind der Zuganker und/oder das Zahnradbauteil und/oder wenigstens eine der Wellen, besonders bevorzugt beide Wellen, entlang einer gemeinsamen Mittellängsachse angeordnet. Weiterhin ist der Durchmesser des Zugankers an den ein Gewinde aufweisenden Enden bevorzugt kleiner als der Durchmesser der Zugankerbohrung. Besonders bevorzugt ist der Durchmesser des Zugankers wenigstens in dem innerhalb der Zugankerbohrung angeordneten Bereich, ggf. abgesehen von einem oder mehreren Abstützabschnitten, kleiner als der Durchmesser der Zugankeraufnahme. Ganz besonders bevorzugt weist der Zuganker in einem innerhalb der Zugankerbohrung des Zahnradbauteils anzuordnenden Bereich wenigstens zwei und insbesondere bevorzugt genau zwei Abstützabschnitte auf. Jeder Abstützabschnitt weist bevorzugt eine zylindrische Form auf bzw. ist ein zylindrischer Abschnitt des Zugankers, der besonders bevorzugt einen zur Zugankerbohrung identischen Durchmesser aufweist, sodass eine radiale Festlegung des Zugankers in der Zugankerbohrung erreicht wird, aber zugleich eine radiale Beweglichkeit und/oder Rotierbarkeit erhalten bleibt.

Gemäß einer vorteilhaften Weiterbildung der Erfindung ist an dem Zahnradbauteil wenigstens ein, bevorzugt zwei Lager zum Anordnen des Zahnradbauteils und insbesondere der gesamten

Vorrichtung zur Drehmomentübertragung an der Spinnmaschine angeordnet, wobei jedes Lager besonders bevorzugt abschnittsweise in das Zahnradbauteil eingebettet, ganz besonders bevorzugt abschnittsweise unterhalb der Verzahnung angeordnet ist, wodurch ein leichtgängiger, spannungsfreier Aufbau und Betrieb sowie zugleich ein Schutz der Lager erreicht werden kann. Bevorzugt sind die Lager beidseitig an dem Zahnradbauteil, insbesondere beidseitig und/oder symmetrisch zur Mitte des Zahnradbauteils, insbesondere entlang einer Mittellängsachse, angeordnet. Alternativ oder zusätzlich sind die Lager bevorzugt auch vollständig oder zumindest abschnittsweise beidseitig der Verzahnung angeordnet. Weiterhin bevorzugt sind die Lager auf einer Oberfläche, bevorzugt einem zylindrischen Oberflächenabschnitt des Zahnradbauteils und besonders bevorzugt an jedem der axialen Fortsätze, festgelegt. Jedes Lager ist weiterhin bevorzugt in dem Zahnradbauteil zwischen 10 % und 90 %, besonders bevorzugt zwischen 25 % und 75 %, ganz besonders bevorzugt zwischen 40 % und 60 % und insbesondere bevorzugt 50 % der Breite des Lagers in die bzw. unterhalb der Verzahnung eingebettet.

Obwohl jedes der Lager beliebig gestaltet sein kann, ist es bevorzugt, dass das Lager jeweils ein Radiallager und besonders bevorzugt ein Radial-Axiallager ist und dabei ganz besonders bevorzugt sowohl gegen eine der Wellen, als auch gegen ein Bauteil der Spinnmaschine abgestützt ist, wodurch eine spiel- und spannungsfreie Anordnung des Zahnradbauteils an der Spinnmaschine und/oder gegenüber den Wellen erreicht werden kann. Das Radiallager kann grundsätzlich beliebig gestaltet sein, wobei das Radiallager, insbesondere der Radiallagerteil des Radial-Axiallagers, bevorzugt ein Wälzlager und besonders bevorzugt ein Tonnenlager ist. Dabei liegt das als Radial-Axiallager gebildete Lager besonders bevorzugt axial an der Welle und insbesondere an einer Seitenfläche der Welle an. Das Radiallager des Radial-Axiallagers ist dabei bevorzugt als Gleitlager gebildet.

Weiterhin ist es bevorzugt, dass die beiden konischen Pressflächen des Zahnradbauteils zueinander identisch gebildet sind und/oder über die gesamte Länge, insbesondere in axialer Richtung des Zahnradbauteils, einen gleichbleibenden Winkel, insbesondere zur Mittellängsachse des Zahnradbauteils, aufweisen, wodurch eine besonders einfache Herstellung sowie eine richtungsunabhängige Anordnung des Zahnradbauteils gegenüber den beiden Wellen möglich ist, sodass nicht durch einen falschen Einbau Spannungen auftreten können. Bevorzugt weisen die beiden konischen Pressflächen eine zueinander identische Länge, Breite und/oder einen zueinander identischen Durchmesser am Anfang und/oder am Ende der konischen Pressfläche auf. Darüber hinaus ist es besonders bevorzugt, dass wenigstens der Zuganker und/oder das Zahnradbauteil und bevorzugt die gesamte Vorrichtung einen spiegelsymmetrischen Aufbau aufweist. Der Aufbau der Bauteile oder der gesamten Vorrichtung ist dabei insbesondere bevorzugt zu einer Ebene spiegelsymmetrisch, die mittig und/oder orthogonal zur Mittellängsachse des Bauteils oder der Vorrichtung angeordnet ist.

Um eine möglichst spannungsfreie Verbindung der beiden Wellen miteinander erreichen zu können, ist es vorteilhaft, dass innerhalb der Vorrichtung zur Drehmomentübertragung so wenig Bauteile wie möglich aneinander angeordnet und insbesondere zueinander beweglich sind, sodass so wenig Verbindungsstellen wie möglich existieren, an denen Spannungen auftreten können. Daher ist es insbesondere bevorzugt, dass der Zuganker oder das Zahnradbauteil einstückig gebildet ist. Es ist besonders bevorzugt, dass der Zuganker und das Zahnradbauteil jeweils einstückig gebildet sind.

Ein Ausführungsbeispiel einer erfindungsgemäßen Vorrichtung zur Drehmomentübertragung wird nachstehend mit Bezug auf eine Zeichnung näher erläutert. In der Figur zeigt:

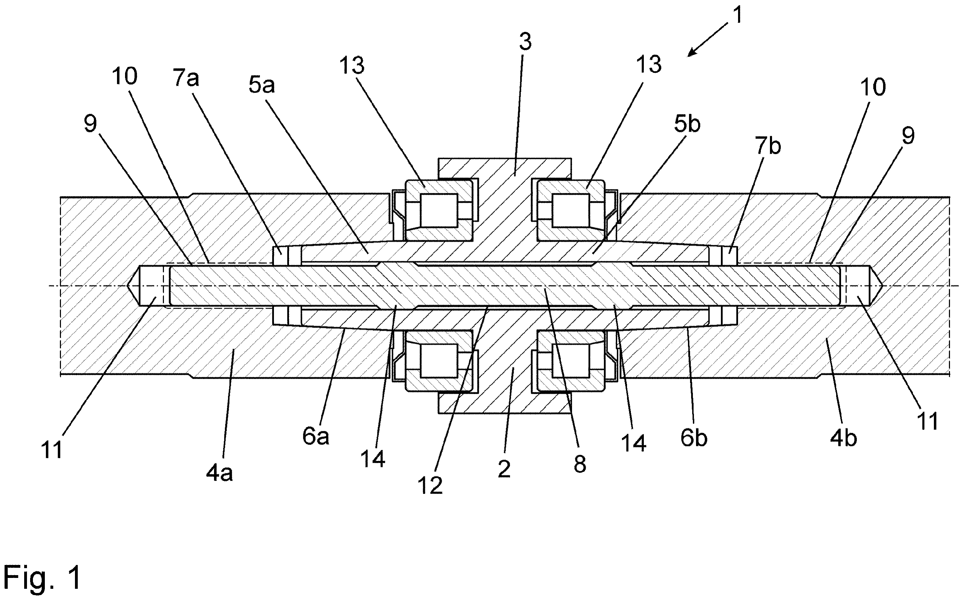

- Fig. 1: eine schematische Ansicht einer Vorrichtung zur Drehmomentübertragung.

Eine in Figur 1 dargestellte Ausführung einer Vorrichtung zur Drehmomentübertragung 1 weist ein Zahnradbauteil 2 sowie zwei Wellen 4a, b auf. Das Zahnradbauteil 2 ist einstückig und rotationssymmetrisch um eine Mittellängsachse gebildet. In einem mittleren Abschnitt weist das Zahnradbauteil 2 eine Verzahnung 3 zur Aufnahme eines Drehmoments von einem weiteren Bauteil, insbesondere einer Antriebseinheit, wie einem Elektromotor, auf.

Beidseitig der Verzahnung 3 schließen sich unmittelbar axiale Fortsätze 5a, b an, die eine hohlzylindrische Form aufweisen. An jeweils dem Ende der beiden axialen Fortsätze 5a, b ist ein konischer Bereich mit einem sich zum Ende hin verringernden Außendurchmesser vorgesehen, sodass die Oberfläche des axialen Fortsatzes 5a, b in diesem Bereich eine konische Pressfläche 6a, b bildet. Dabei ist das gesamte Zahnradbauteil 2 spiegelsymmetrisch zur Mitte zwischen den beiden axialen Fortsätzen 5a, b gebildet.

Jede der beiden Wellen 4a, b weist eine Aufnahme 7a, b für ein Ende eines axialen Fortsatzes 5a, b des Zahnradbauteils 2 auf, wobei die Aufnahme 7a, b eine konische Form aufweist, die an die konische Pressfläche 6a, b des Zahnradbauteils 2 angepasst ist, sodass jeweils ein axialer Fortsatz 5a, b in eine Aufnahme 7a, b eingepresst werden kann und dort eine reibschlüssige, verdrehfeste Verbindung zur direkten Drehmomentübertragung zwischen dem Zahnradbauteil 2 und der Welle 4a, b bildet.

Zur axialen Festlegung der Wellen 4a, b an dem Zahnradbauteil 2 sowie zum Erzeugen des Druckes für die Pressverbindung zwischen der konischen Pressfläche 6a, b des Zahnradbauteils 2 und der Oberfläche im Inneren der Aufnahme 7a, b der Welle 4a, b ist ein Zuganker 8 vorgesehen. Dabei weist der Zuganker 8 im Bereich beider Enden ein Außengewinde 9 auf und die Wellen 4a, b weisen eine Zugankeraufnahme 11 mit einem Innengewinde 10 auf, sodass der Zuganker 8 mit jeder der Wellen 4a, b verschraubt werden kann.

Der Zuganker 8 ist in einem mittleren Bereich zwischen den Außengewinden 9 in einer Zugankerbohrung 12 des Zahnradbauteils 2 angeordnet, wobei der Zuganker 8 gegenüber dem Zahnradbauteil 2 sowohl axial verschieblich ist, als auch im Inneren der Zugankerbohrung 12 rotieren kann. Zur spielfreien Festlegung des Zugankers 8 in der Zugankerbohrung 12 weist der Zuganker 8 zwei Abstützabschnitte 14 auf, die eine zylindrische Form aufweisen und deren Außendurchmesser im Wesentlichen dem Innendurchmesser der Zugankerbohrung 12 entspricht.

Um einerseits das Zahnradbauteil 2 gegenüber den Wellen 4a, b axial abzustützen und andererseits das Zahnradbauteil 2 radial gegenüber einem weiteren Bauteil der Spinnmaschine festlegen zu können, sind zwei Radial-Axiallager 13 auf den axialen Fortsätzen 5a, b angeordnet. Dabei ist jedes der Radial-Axiallager 13 etwa zur Hälfte seiner Breite unterhalb der Verzahnung 3 in das Zahnradbauteil 2 eingebettet angeordnet. Zudem ist jedes der Radial-Axiallager 13 derart angeordnet, dass es axial zu einer Seite gegen das Zahnradbauteil 2 und zur anderen Seite gegen eine Außenfläche der Welle 4a, b abgestützt ist.

### Bezugszeichenliste

- 1: Vorrichtung zur Drehmomentübertragung
- 2: Zahnradbauteil
- 3: Verzahnung
- 4a, b: Welle
- 5a, b: axialer Fortsatz
- 6a, b: konische Pressfläche
- 7a, b: Aufnahme
- 8: Zuganker
- 9: Gewinde des Zugankers
- 10: Gewinde der Zugankeraufnahme
- 11: Zugankeraufnahme
- 12: Zugankerbohrung
- 13: Lager
- 14: Abstützabschnitte

## Patentansprüche

1. Vorrichtung zur Drehmomentübertragung (1) zwischen einer Antriebseinheit und einem rotierenden Bauteil einer Spinnmaschine, mit
- einem Zahnradbauteil (2) mit einer Verzahnung (3) zur Aufnahme eines Drehmoments von der Antriebseinheit und
- zwei Wellen (4a, b) zur Übertragung des Drehmoments auf jeweils ein rotierendes Bauteil, wobei
- das Zahnradbauteil (2) an beiden Seiten der Verzahnung (3) jeweils einen axialen Fortsatz (5a, b) mit einer konischen Pressfläche (6a, b) zur Übertragung des Drehmoments auf eine der Wellen (4a, b) aufweist und
- jede der konischen Pressflächen (6a, b) in einer Aufnahme (7a, b) einer der Wellen (4a, b) angeordnet ist und dabei eine Pressverbindung zur Drehmomentübertragung zwischen dem Zahnradbauteil (2) und der Welle (4a, b) bildet.

2. Vorrichtung zur Drehmomentübertragung nach Anspruch 1, **dadurch gekennzeichnet, dass** zur axialen Fixierung des Zahnradbauteils (2) an den beiden Wellen (4a, b) ein Zuganker (8) vorgesehen ist, der an beiden Enden ein Gewinde (9) aufweist, das jeweils in einem korrespondierenden Gewinde (10) in einer Zugankeraufnahme (11) der Welle (4a, b) festlegbar ist.

3. Vorrichtung zur Drehmomentübertragung nach Anspruch 1 oder 2, **dadurch gekennzeichnet, dass** die Zugankeraufnahme (11) in der Welle (4a, b) koaxial zur Aufnahme (7a, b) für einen axialen Fortsatz (5a, b) des Zahnradbauteils (2) angeordnet ist.

4. Vorrichtung zur Drehmomentübertragung nach wenigstens einem der vorhergehenden Ansprüche, **dadurch gekennzeichnet, dass** der Zuganker (8) in einer Zugankerbohrung (12) des Zahnradbauteils (2) angeordnet ist, wobei die Zugankerbohrung (12) als eine entlang der Mittellängsachse und/oder der Rotationsachse des Zahnradbauteils (2) verlaufende Bohrung gebildet ist.

5. Vorrichtung zur Drehmomentübertragung nach wenigstens einem der vorhergehenden Ansprüche, **dadurch gekennzeichnet, dass** der Zuganker (8) in der Zugankerbohrung (12) des Zahnradbauteils (2) axial verschieblich angeordnet und/oder frei rotierbar ist.

6. Vorrichtung zur Drehmomentübertragung nach wenigstens einem der vorhergehenden Ansprüche, **dadurch gekennzeichnet, dass** an dem Zahnradbauteil (2) zwei Lager (13) zum Anordnen des Zahnradbauteils (2) an der Spinnmaschine angeordnet sind, wobei jedes Lager (13) abschnittsweise unterhalb der Verzahnung (3) angeordnet ist.

7. Vorrichtung zur Drehmomentübertragung nach wenigstens einem der vorhergehenden Ansprüche, **dadurch gekennzeichnet, dass** das Lager (13) jeweils ein Radial-Axiallager ist und dabei sowohl gegen eine der Wellen (4a, b), als auch gegen ein Bauteil der Spinnmaschine abgestützt ist.

8. Vorrichtung zur Drehmomentübertragung nach wenigstens einem der vorhergehenden Ansprüche, **dadurch gekennzeichnet, dass** die beiden konischen Pressflächen (6a, b) des Zahnradbauteils (2) zueinander identisch gebildet sind und/oder über die gesamte Länge einen gleichbleibenden Winkel aufweisen.

9. Vorrichtung zur Drehmomentübertragung nach wenigstens einem der vorhergehenden Ansprüche, **dadurch gekennzeichnet, dass** die gesamte Vorrichtung (1) einen spiegelsymmetrischen Aufbau aufweist.

10. Vorrichtung zur Drehmomentübertragung nach wenigstens einem der vorhergehenden Ansprüche, **dadurch gekennzeichnet, dass** der Zuganker (8) und/oder das Zahnradbauteil (2) jeweils einstückig gebildet sind.

11. Antriebseinrichtung für eine Spinnmaschine, mit einer motorischen Antriebseinheit und einer Vorrichtung (1) nach wenigstens einem der Ansprüche 1 - 10 zur Drehmomentübertragung zwischen der Antriebseinheit und einem rotierenden Bauteil einer Spinnmaschine.

12. Spinnmaschine, mit mehreren zueinander identischen Arbeitsstellen sowie wenigstens einer Vorrichtung (1) nach wenigstens einem der Ansprüche 1 - 10 zur Drehmomentübertragung zwischen einer Antriebseinheit und einem rotierenden Bauteil der Spinnmaschine, wobei die Drehmomentübertragung an einer Antriebsstelle mittig zwischen zwei Arbeitsstellen erfolgt.

## Claims

1. Device for transmitting torque (1) between a drive unit and a rotating component of a spinning machine, with
- a gear component (2) having teeth (3) for receiving a torque from the drive unit and
- two shafts (4a, b) for transmitting the torque to one rotating component each, in which case
- the gear component (2) has, on each of the two sides of the teeth (3), an axial extension (5a, b) having a conical pressing surface (6a, b) for transmitting the torque to one of the shafts (4a, b) and
- each of the conical pressing surfaces (6a, b) is arranged in a receptacle (7a, b) of one of the shafts (4a, b) and thus forms a press-fit connection for transmitting torque between the gear component (2) and the shaft (4a, b).

2. Device for transmitting torque according to claim 1, **characterised in that**, in order to axial fasten the gear component (2) to the two shafts (4a, b), a tie rod (8) is provided, which has, at each of the two ends, a screw thread (9), which can be fastened in a corresponding screw thread (10) in a tie rod receptacle (11) of the shaft (4a, b).

3. Device for transmitting torque according to claim 1 or 2, **characterised in that** the tie rod receptacle (11) in the shaft (4a, b) is arranged coaxially to the receptacle (7a, b) for an axial extension (5a, b) of the gear component (2).

4. Device for transmitting torque according to at least one of the preceding claims, **characterised in that** the tie rod (8) is arranged in a tie rod bore (12) of the gear component (2), the tie rod bore (12) being formed as a bore running along the central longitudinal axis and/or along the axis of rotation of the gear component (2).

5. Device for transmitting torque according to at least one of the preceding claims, **characterised in that** the tie rod (8) is axially slidably arranged and/or freely rotatable in the tie rod bore (12) of the gear component (2).

6. Device for transmitting torque according to at least one of the preceding claims, **characterised in that** two bearings (13) for arranging the gear component (2) on the spinning machine are arranged on the gear component (2), each bearing (13) being partly arranged below the teeth (3).

7. Device for transmitting torque according to at least one of the preceding claims, **characterised in that** each bearing (13) is a radial-axial bearing and is supported both against one of the shafts (4a, b) and against a component of the spinning machine.

8. Device for transmitting torque according to at least one of the preceding claims, **characterised in that** the two conical pressing surfaces (6a, b) of the gear component (2) are identical to one another and/or have a constant angle over the entire length.

9. Device for transmitting torque according to at least one of the preceding claims, **characterised in that** the whole device (1) has a mirror-symmetrical design.

10. Device for transmitting torque according to at least one of the preceding claims, **characterised in that** the tie rod (8) and/or the gear component (2) are each formed as a single piece.

11. Drive device for a spinning machine, with a motor drive unit and a device (1) according at least one of claims 1 to 10 for transmitting torque between the drive unit and a rotating component of a spinning machine.

12. Spinning machine, with a plurality of identical workstations and at least one device (1) according to at least one of claims 1 to 10 for transmitting torque between a drive unit and a rotating component of the spinning machine, the torque transmission occurring at a drive point centrally between two workstations.

## Revendications

1. Dispositif de transmission de couple (1) entre une unité d'entraînement et un composant rotatif d'un métier à tisser, avec
- une roue d'engrenage (2) avec une denture (3) permettant de recevoir un couple de l'unité d'entraînement et
- deux arbres (4a, b) pour la transmission du couple à un composant en rotation,
- la roue d'engrenage (2) présentant sur les deux côtés de sa denture (3) un prolongement axial (5a, b) avec une surface de pression conique (6a, b) pour la transmission du couple à un des arbres (4a, b) et
- chacune des surfaces de pression coniques (6a, b) étant logée dans un logement (7a, b) d'un des arbres (4a, b) et un assemblage par pression veillant ici à la transmission du couple entre la roue d'engrenage (2) et l'arbre (4a, b).

2. Dispositif de transmission de couple selon la revendication 1, **caractérisé en ce qu'**un tirant d'ancrage (8) présentant sur ces deux extrémités un filetage (9) pouvant être fixé dans un filetage (10) correspondant dans un logement pour tirant d'ancrage (11) de l'arbre (4a, b) est prévu pour la fixation axiale de la roue d'engrenage (2) sur les deux arbres (4a, b).

3. Dispositif de transmission de couple selon les revendications 1 ou 2, **caractérisé en ce que** le logement pour tirant d'ancrage (11) est fixé dans l'arbre (4a, b) coaxialement au logement (7a, b) pour un prolongement axial (5a, b) de la roue d'engrenage (2).

4. Dispositif de transmission de couple selon au moins une des revendications précédentes, **caractérisé en ce que** le tirant d'ancrage (8) est placé dans un orifice pour tirant d'ancrage (12) de la roue d'engrenage (2), l'orifice pour tirant d'ancrage (12) prenant la forme d'un trou s'étendant le long de l'axe longitudinal central et/ou de l'axe de rotation de la roue d'engrenage (2).

5. Dispositif de transmission de couple selon au moins une des revendications précédentes, **caractérisé en ce que** le tirant d'ancrage (8) peut être décalé de manière axiale dans l'orifice pour tirant d'ancrage (12) de la roue d'engrenage (2) et/ou tourner librement.

6. Dispositif de transmission de couple selon au moins une des revendications précédentes, **caractérisé en ce que** la roue d'engrenage (2) est dotée de deux roulements (13) pour la mise en place de la roue d'engrenage (2) sur le métier à filet, chaque roulement (13) étant placé par sections sous la denture (3).

7. Dispositif de transmission de couple selon au moins une des revendications précédentes, **caractérisé en ce que** le roulement (13) est un palier de butée radial-axial appuyé contre un des arbres (4a, b), ainsi que contre un composant du métier à filer.

8. Dispositif de transmission de couple selon au moins une des revendications précédentes, **caractérisé en ce que** les deux surfaces de pression coniques (6a, b) de la roue d'engrenage (2) sont identiques et/ou présentent un angle constant sur toute leur longueur.

9. Dispositif de transmission de couple selon au moins une des revendications précédentes, **caractérisé en ce que** la totalité du dispositif (1) présente une structure symétrique en miroir.

10. Dispositif de transmission de couple selon au moins une des revendications précédentes, **caractérisé en ce que** le tirant d'ancrage (8) et/ou la roue d'engrenage (2) sont fabriqués d'une pièce.

11. Dispositif d'entraînement pour un métier à filer, avec une unité d'entraînement motorisée et un dispositif (1) selon au moins une des revendications 1 à 10 pour la transmission d'un couple entre l'unité d'entraînement et un composant rotatif d'un métier à filer.

12. Métier à filer, avec plusieurs postes de travail identiques entre eux, ainsi qu'au moins un dispositif (1) selon au moins une des revendications 1 à 10 pour la transmission d'un couple entre une unité d'entraînement et un composant rotatif du métier à filer, la transmission du couple à un point d'entraînement ayant lieu de manière centrale entre deux postes de travail.
